# EUROPÄISCHE PATENTSCHRIFT

(11) **EP 3 733 340 B1**
(45) Veröffentlichungstag und Bekanntmachung des Hinweises auf die Patenterteilung: **20.03.2024**
(21) Anmeldenummer: 20171390.6
(22) Anmeldetag: 24.04.2020
(51) Int. Cl.: C23C 24/08, C23C 30/00, B23K 35/02, B22C 3/00, B22D 17/22, B23K 35/32, B22C 9/06

(54) **GIESSWERKZEUG FÜR DEN METALLDRUCKGUSS**
CASTING TOOL FOR METAL DIE CASTING
OUTIL DE COULÉE POUR COULÉE SOUS PRESSION DE MÉTAL

(30) Priorität: 30.04.2019 DE 202019102420 U
(43) Veröffentlichungstag der Anmeldung: 04.11.2020
(73) Patentinhaber: Regusewicz, Franz, 84061 Ergoldsbach (DE)
(72) Erfinder: REGUSEWICZ, Franz, 84061 Ergoldsbach (DE)
(74) Vertreter: Laufhütte, Dieter

(56) Entgegenhaltungen:
- CN-A- 102 601 340
- CN-A- 106 367 707
- DE-A1-102011 117 042
- JP-A- H01 118 355
- JP-A- H08 174 177
- US-A1- 2016 296 997

## Beschreibung

Die Erfindung betrifft ein Giesswerkzeug für den Metalldruck- oder Metallschwerkraftguss, insbesondere Aluminiumdruck- oder Aluminiumschwerkraftguss, das ein die Giessform bildendes Grundmaterial umfasst, wobei das Grundmaterial Stahl, insbesondere Werkzeugstahl ist.

Für die Herstellung von Giesswerkzeugen für den Aluminiumdruckguss oder Aluminiumschwerkraftguss werden grösstenteils Warmarbeitstähle als Grundmaterial der Gussform eingesetzt. Beim Metallgiessen unterliegen die eingesetzten Giesswerkzeuge hohen thermischen, korrosiven als auch mechanischen Belastungen. Bedingt ist dies einerseits durch die hohe Temperatur des flüssige Aluminiums, das in der Regel bei etwa 700°C in die Giessform eingegossen bzw. eingespritzt wird, aber auch durch das hohe Druckniveau von bis zu 1000 Bar, mit dem beim Aluminiumdruckguss das Aluminium in die Giessform eingespritzt wird. Die intensive Einwirkung des flüssigen Aluminiums in Kombination mit der wechselnden Temperaturbelastung führt mit steigender Abguss- bzw. Schussanzahl zu einer fortschreitenden Schädigung der Werkzeugoberfläche. Insbesondere verursacht das über die Formoberfläche strömende flüssige Aluminium Auswaschungen, die im Wesentlichen durch Korrosion, Erosion und Anschweissungen verursacht werden.

Die fortschreitende Schädigung des Werkzeuges äussert sich in der Bildung von Rissen und Rissnetzwerken, insbesondere an der Oberfläche des Werkzeuges, und führt letztendlich zum Totalausfall des Giesswerkzeuges. Der gesamte Schädigungsprozess des Giesswerkzeuges wird als thermische Ermüdung (Brandrisse) bezeichnet.

Da die Herstellung solcher Gussformen für den Metallguss äusserst kostspielig ist, werden durch den altersbedingten notwendigen Austausch der Gussformen in der Serienfertigung auch die Stückzahlpreise der gegossenen Werkstücke in die Höhe getrieben. In der Praxis lässt sich die Lebensdauer gattungsgemässer Giesswerkzeuge aus Warmarbeitstahl mit ca. 100.000 bis 150.000 Schuss beziffern.

Dokument JPH08174177 offenbart eine zylindrische Druckgussform mit hervorragender Erosions-, Verschleiß- und Wärmezyklenbeständigkeit durch Aufbringen einer verschleißbeständigen Schicht auf der inneren Umfangsfläche der zylindrischen Druckgussform.

Die Aufgabe der vorliegenden Erfindung besteht darin, die Lebensdauer gattungsgemässer Giesswerkzeuge für den Metallguss durch geeignete Massnahmen zu erhöhen.

Gelöst wird diese Aufgabe durch ein Giesswerkzeug gemäss den Merkmalen des Anspruchs 1, sowie durch ein Verfahren zur Herstellung eines Giesswerkzeugs gemäß Anspruch 11 und durch die Verwendung eines Giesswerkzeugs gemäß Anspruch 13. Vorteilhafte Ausgestaltungen des Giesswerkzeuges sowie des Verfahrens zur Herstellung des Giesswerkzeugs sind Gegenstand der abhängigen Ansprüche.

Erfindungsgemäss wird für das gattungsgemässe Giesswerkzeug vorgeschlagen, dass die Oberfläche des verwendeten Grundmaterials des Giesswerkzeuges zumindest bereichsweise mit einer mit Wolfram versetzten Verschleissschutzschicht versehen ist. Die bestehende Verschleissschutzschicht des Giesswerkzeuges zeichnet sich dadurch aus, dass diese durch Aufschweissen eines Wolframcarbit-haltigen Schweisszusatzwerkstoffes auf die Oberfläche des Grundmaterials hergestellt wurde.

Wolfram gehört zu den Refraktärmetallen und ist ein chemisch sehr widerstandsfähiges Metall. Die Wolfram enthaltende Schutzschicht des Giesswerkzeuges zeichnet sich durch eine besonders gute chemische Beständigkeit gegen Aluminiumschmälze aus. Ebenso trägt die aufgebrachte Schutzschicht zur Optimierung der Wärmeleitfähigkeit als auch der Warmfestigkeit für den Metallguss bei. Auch die Widerstandsfähigkeit des Giesswerkzeuges gegen Erosion wird mittels der Schutzschicht deutlich gegenüber konventionellen Giesswerkzeugen erhöht.

In Summe zeichnet sich das erfindungsgemäße Werkzeug durch eine deutlich höhere Lebensdauer im Vergleich zu herkömmlichen Giesswerkzeugen aus. Vorzugsweise kann die geschätzte, maximal mögliche Schusszahl bis zum notwendigen Werkzeugtausch um den Faktor 2, idealerweise um den Faktor 3 oder sogar 4 erhöht werden. Im Ergebnis lassen sich dadurch die Stückteilkosten der Giesswerkstücke senken.

Ein weiterer Vorteil der Erfindung besteht darin, dass durch die erfindungsgemäße Oberflächenbeschichtung des Grundmaterials auf ein für den Metallguss üblicherweise notwendiges Trennmittel verzichtet werden kann.

Bevorzugt ist es, wenn der Volumenanteil von Wolfram bzw. Wolframcarbid innerhalb der aufgeschweissten Verschleißschutzschicht zwischen 30%-40%, vorzugsweise zwischen 32%-38%, idealerweise bei etwa 36% liegt. Der resultierende Volumenanteil von Wolfram/Wolframcarbid innerhalb der aufgeschweissten Verschleissschutzschicht lässt sich durch die Schweissparameter des angewandten Schweissverfahrens, bspw. die Schweisstemperatur bzw. Laserleistung, und/oder. die konkrete Zusammensetzung und/oder Menge des verwendeten Schweisszusatzwerkstoffes steuern.

Der vorgenannte Wolfram/Wolframcarbid-Volumenanteil wird insbesondere in Abhängigkeit des gewünschten Grades der Wärmeleitfähigkeit und/oder Verschleißfähigkeit des resultierenden Gusswerkzeuges gewählt. Von Interesse kann ebenso die Haftungseigenschaft der Verschleißschicht sein, um gegebenenfalls auf ein Trennmittel während des Gießverfahrens verzichten zu können.

Bevorzugt weist der übrige Volumenanteil der Verschleissschicht eine durchschnittlichen Härtegrad von etwa 650-750 HV 0,03, besonders bevorzugt von etwa 720 HV 0,03 auf (gemessen nach Vickers)
Es ist nicht zwingend notwendig, dass die gesamte Oberfläche des Grundmaterials mit einer entsprechenden Schutzschicht versehen ist. Grundsätzlich ist eine Beschichtung solcher Bereiche sinnvoll, die während des Giessprozesses auch in Kontakt mit dem flüssigen Metall kommen. Aber auch hinsichtlich dieser Bereiche kann die Beschichtung mit unterschiedlichen Eigenschaften ausgestaltet sein, um dem über die Oberfläche abweichendem Belastungsgrad während des Gussverfahrens Rechnung zu tragen.

Das Giesswerkzeug eignet sich insbesondere für den Aluminiumdruckguss oder aber den Aluminiumschwerkraftguss.

Unter den verfügbaren Varianten des Wolframcarbids kristallisiert sich für die Beschichtung der Giessform insbesondere das Wolfram-Schmelzcarbid heraus, das im Hinblick auf die erzielbaren technischen Eigenschaften aber auch im Hinblick auf den Auftragsprozess der Verschleissschutzschicht von besonderem Interesse ist. Gemäß der vorliegenden Erfindung zeichnet sich das Giesswerkzeug daher dadurch aus, dass die Schutzschicht durch Auftrag eines Schweisszusatzwerkstoffes umfassend ein Wolfram-Schmelzcarbid hergestellt ist. Im Gegensatz zum einphasigen Wolfram-monocarbid weisen Wolfram-Schmelzcarbide einen zweiphasigen Aufbau bestehend aus einem Gemenge von WC und W₂C auf. Durch Verwendung eines Wolfram-Schmelzcarbides WC/W₂C lassen sich die positiven Eigenschaften beider Carbide ausnutzen. Eine Verschiebung des Kohlenstoffgehaltes zu höheren WC oder W₂C Anteilen führt hierbei zu einer Abnahme der resultierenden Verschleissbeständigkeit.

Gemäß der vorliegenden Erfindung ist die Verschleissschutzschicht durch einen Auftrag eines Schweisszusatzwerkstoffes umfassend ein eutektisches Gemenge aus WC und W₂C hergestellt. Der dadurch bedingt minimale Schmelzpunkt des Wolfram-Schmelzcarbids bringt unter anderem gewisse Vorteile bei der Aufbringung auf das Grundmaterials mit sich und verbessert in gleicher Weise somit die Eigenschaften der aufgebrachten Schicht.

Von besonders grossem Vorteil ist es, wenn die Schutzschicht durch Auftrag eines Schweisszusatzwerkstoffes umfassend Wolfram-Schmelzcarbid mit Phasenanteilen von 73-80 Gew.-% W₂C und 20-27 Gew.-% WC hergestellt ist.

Durch den vergleichsweise hohen Schmelzpunkt des mit Wolfram versetzten Schweisszusatzwerkstoffes wird dieses üblicherweise pulvermetallurgisch hergestellt. Vor diesem Hintergrund ist es denkbar, dass die Verschleissschutzschicht durch den Auftrag eines pulverförmigen Schweisszusatzwerkstoffes hergestellt ist, wobei das Pulver ein Wolfram-Schmelzcarbid umfasst. Denkbar ist hierbei auch eine Zugabe von Eisen und/oder Nickel und/oder Kobalt, sodass der Schweisszusatzwerkstoff ein Pulver bestehend aus Wolfram-Schmelzcarbid auf Basis von Eisen und/oder Nickel und/oder Kobalt ist.

Gemäß einer weiteren vorteilhaften Ausführung des Giesswerkzeuges kann die Verschleissschutzschicht dadurch gekennzeichnet sein, dass diese mittels Laserauftragsschweissen, auch als "Laser Metall Deposition LMD" bezeichnet, auf die Oberfläche des Grundmaterials aufgebracht ist. Ein Laserstrahl erwärmt hierbei zunächst das Grundmaterial des Giesswerkzeuges lokal und erzeugt an dieser Stelle ein Schmelzbad aus dem Grundmaterial des Giesswerkzeuges. Das Wolframcarbid bzw. ein das Wolframcarbid enthaltendes Metallpulver wird dann direkt in das Schmelzbad gesprüht, vorzugsweise mittels einer Düse. Es entsteht dadurch an der Oberfläche des Grundmaterials ein neues Werkstoffgefüge mit einer zähen Matrix, in der das Wolfram bzw. Wolframcarbid metallurgisch fest eingebunden ist. Optional kann die Verschleissschutzschicht durch das Laserauftragsschweissen zwei oder mehrerer Einzelschichten übereinander hergestellt sein. Dadurch lässt sich die Verschleissschutzschicht flexibel auf die anwendungsspezifisch gestellten Anforderungen an das Giesswerkzeug adaptieren.

Alternativ kann die Verschleissschutzschicht auch mittels Auftrag per Laser Metall Fusionsverfahren, kurz LMF, hergestellt sein. Hierbei werden ein oder mehrere Schichten aus einem Pulverbett heraus auf dem Grundmaterial des Giesswerkzeuges adaptiv aufgebaut.

In einer besonders vorteilhaften Ausgestaltung des Giesswerkzeugs weist dieses eine über die beschichtete Oberfläche des Giesswerkzeuges variierende Schichtstärke der Verschleissschutzschicht auf. Insbesondere sind diejenigen Oberflächenbereiche, die während des Giessprozesses einer höheren Belastung als die übrigen Oberflächenbereiche unterliegen, mit einer höheren Schichtstärke versehen. Die Variierung der Schichtstärke wird beispielsweise durch die Zyklenanzahl von Auftragsschweissvorgängen pro Flächenabschnitt erreicht. Denkbar ist es ebenfalls alternativ oder zusätzlich den Anteil der Wolframcarbid Partikel pro Schichtvolumen zu variieren, um dadurch gezielt für höher belastete Oberflächenbereiche eine größere Widerstandsfähigkeit zu gewährleisten. Die Änderung des Wolframcarbid-Anteils pro Volumenfläche lässt sich bspw. durch Änderung der Schweisszusatzwerkstoff-Zusammensetzung erreichen.

Das erfindungsgemässe Giesswerkzeug kann sich weiterhin in vorteilhafter Weise dadurch auszeichnen, dass die mittels Schweissens aufgebrachte Auftragsschicht in einem anschliessenden Arbeitsschritt mittels Erodieren auf das gewünschte Formmaß bzw. Volumen nachbearbeitet ist.

Das Grundmaterial des erfindungsgemässen Giesswerkzeuges besteht vorzugsweise aus Werkzeugstahl. Von Vorteil ist ein Warmarbeitsstahl, wie 1.2343 oder 1.2344. Anstatt des vergleichsweise teuren Warmarbeitsstahls kann das Grundmaterial auch aus einem günstigeren Basismaterial mit geringerem Verschleisswiderstand und/oder geringerer Warmfestigkeit bestehen. Durch die aufgebrachte Verschleissschutzschicht lassen sich diese Defizite gegenüber Warmarbeitsstählen jedoch zumindest teilweise kompensieren. Zwar wird im Ergebnis gegebenenfalls keine so deutliche Steigerung der Lebensdauer des Giesswerkzeuges erreicht, die erzielbare Lebensdauer liegt jedoch noch ausreichend weit über der erwarteten Lebensdauer konventioneller Giesswerkzeuge. Durch den gewonnenen Kostenvorteil ist die geringere Lebensdauer akzeptabel.

Neben dem erfindungsgemässen Gusswerkzeug wird vorliegend ebenfalls ein Verfahren zur Herstellung eines entsprechenden Giesswerkzeuges offenbart, wobei das Verfahren im Einzelnen vorsieht, zunächst die Gussform aus einem Grundmaterial bestehend aus Stahl, insbesondere Werkzeugstahl, herzustellen und dieses anschliessend durch Oberflächenbehandlung mit einer zusätzlichen Verschleissschutzschicht zu versehen. Die Aufbringung einer solchen Verschleissschutzschicht erfolgt durch Aufschweissen eines Wolframcarbid-haltigen Schweisszusatzwerkstoffes auf die Oberfläche des Giesswerkzeuges.

Die einzelnen Verfahrensschritte sowie deren Vorteile entsprechen im Wesentlichen den Verfahrensschritten, die bereits vorstehend zur Erläuterung des erfindungsgemässen Giesswerkzeuges diskutiert wurden. Gemäß der vorliegenden Erfindung wird für das Herstellungsverfahren ein Schweisszusatzwerkstoff umfassend ein Wolfram-Schmelzcarbid verwendetet. Erfindungsgemäß entspricht das Wolfram-Schmelzcarbid einem eutektischen Gemenge aus WC und W₂C, besonders bevorzugt mit Phasenanteilen von 73-80 Gew.-% W₂C und 20-27 Gew.-% WC. Für den Auftrag der Verschleissschutzschicht liegt der Schweisszusatzwerkstoff vorzugsweise in Pulverform vor, wobei das Pulver Wolfram-Schmelzcarbid auf Basis von Eisen und/oder Nickel und/oder Cobalt ist oder umfasst. Gemäß bevorzugter Ausführung des Verfahrens erfolgt der Auftrag der Verschleissschutzschicht per Laserauftragsschweissen (Laser Metal Deposition LMD) oder per Laser Metal Fusion (LMF). Der Schweissauftrag kann nachfolgend optional mittels Erodieren nachbearbeitet werden. Als Grundmaterial kommt vorzugsweise Warmarbeitsstahl, insbesondere 1.2343 oder 1.2344 zum Einsatz. Vorzugsweise kann die Schichtstärke der Verschleissschutzschicht durch Variation der Zyklenanzahl von Auftragsschweissvorgängen variiert werden. Die Schichtstärke kann optional auch nur für definierte Oberflächenabschnitte variiert werden. Genauso kann durch Änderung der Schweißzusatzstoffzusammensetzung bzw. Pulverzusammensetzung der Anteil von Wolframcarbid-Partikeln pro Schichtvolumenbereiche angepasst werden.

Ebenfalls durch diese Anmeldung ist die Verwendung eines erfindungsgemässen Giesswerkzeuges für den Aluminiumdruckguss bzw. den Aluminiumschwerkraftguss offenbart.

Nachfolgend soll nochmals kurz ein Beispiel für das Verfahren zur Herstellung eines erfindungsgemäßen Giesswerkzeuges für den Aluminiumdruckguss oder Aluminiumschwerkraftguss umrissen werden. Zunächst wird die Gussform aus einem Warmarbeitsstahl, entweder 1.2343 oder 1.2344 hergestellt. Für die Oberflächenbehandlung des Giesswerkzeuges wird zunächst ein Pulver mit einem eutektische Gemenge von WC und W₂C auf Basis von Ne/Fe oder Co pulvermetallurgisch bereitgestellt. Das im Pulver enthaltene eutektische Wolfram-Schmelzcarbid besteht aus 73-80 Gew.-% W₂C und 20-27 Gew.-% WC.

Das Pulver wird dann mittels Laserschweissverfahren LMD oder alternativ mittels LMF auf das Giesswerkzeug adaptiv aufgebracht. Dabei wird das Grundmaterial mit dem Laser aufgeschmolzen und das Pulver in das flüssige Grundmaterial eingebracht. Dadurch wird ein neuer Werkstoff an der Oberfläche des Grundmaterials mit neuen Materialeigenschaften geschaffen. Mit dem Laserauftragsschweissen lassen sich unterschiedliche Schichtdicken auftragen, insbesondere in Abhängigkeit der von der konkreten Giessanwendung gestellten Anforderungen an das herzustellende Giesswerkzeug.

Durch den Pulvereintrag des Wolfram-Schmelzcarbids auf Ni/Fe oder Co-Basis in das Grundmaterial des Werkzeuges entsteht eine neue metallurgische Verbindung an der Oberfläche des Giesswerkzeuges mit folgenden Eigenschaften:
1. Hohe chemische Beständigkeit gegen Aluminiumschmelzen
2. Hohe Wärmeleitfähigkeit
3. Hohe Warmfestigkeit
4. Hohe Widerstandsfähigkeit gegen Erosion

Aus diesen Gründen wird die Standzeit des Werkzeuges im Produktionsbetrieb massiv verlängert, beispielsweise bis zu 500.000 Schuss. Die Auftragsschichten können anschliessend nach dem Laserschweissen mit dem aus dem Werkzeugbau bekannten Verfahren Erodieren oberflächentechnisch bearbeitet werden. Die sog. Schutzschicht kann sowohl als Reparaturlösung als auch als Lösung für neue Giesswerkzeuge aufgebracht werden.

Auch besteht die Möglichkeit, die Wolframcarbid-Schutzschicht je nach Anforderung an das resultierende Giesswerkzeug in unterschiedlichen Schichtstärken aufzutragen. Beispielsweise wird die Schichtstärke bei hochbelasteten Bereichen erhöht, während weniger belastete Bereiche des Giesswerkzeugs mit geringeren Schichtstärken versehen werden. Ebenso ist es möglich, den Wolframcarbid-Anteil mengenmässig über die Oberfläche des Giesswerkzeuges zu variieren.

Eine andere Möglichkeit besteht darin, ein günstigeres Basismaterial für das Grundwerkzeug zu nehmen und stattdessen nur das hochwertige Wolframcarbid aufzutragen. Dies reduziert die Werkzeugkosten pro produziertes Gussteil zusätzlich, da aktuell Werkzeugstahl 1.2343 genommen wird, der sehr teuer ist.

## Patentansprüche

1. Giesswerkzeug für den Metalldruck- oder Metallschwerkraftguss, insbesondere Aluminiumdruck- oder Aluminiumschwerkraftguss, umfassend ein die Giessform bildendes Grundmaterial bestehend aus Stahl, insbesondere Werkzeugstahl,
wobei zumindest auf Teilbereichen der Oberfläche des Grundmaterials eine mit Wolfram versetzte Verschleissschutzschicht aufgetragen ist, **dadurch gekennzeichnet, dass** die Verschleissschutzschicht durch Aufschweissen eines Wolframcarbid-haltigen Schweisszusatzwerkstoffes auf die Oberfläche des Trägermaterials hergestellt ist, wobei der verwendete Schweisszusatzwerkstoff Wolfram-Schmelzcarbid umfasst, das aus einem eutektischen Gemenge aus WC und W₂C besteht.

2. Giesswerkzeug nach Anspruch 1, **dadurch gekennzeichnet, dass** die aufgebrachte Verschleissschutzschicht einen Wolfram/Wolframcarbid Volumenanteil von etwa 30-40% Volumenanteil, bevorzugt 32%-38% Volumenanteil, idealerweise etwa 36% Volumenanteil.

3. Giesswerkzeug nach Anspruch 2, **dadurch gekennzeichnet, dass** der verbleibende, nicht Wolfram/Wolframcarbid-haltige Volumenanteil der Verschleissschutzschicht einen durchschnittlichen Härtegrad von 650-750 HV 0,03, bevorzugt von etwa 720 HV 0,03 aufweist.

4. Giesswerkzeug nach einem der vorstehenden Ansprüche, **dadurch gekennzeichnet, dass** das Wolfram-Schmelzcarbid Phasenanteile von 73-80 Gew.-% W₂C und 20-27 Gew.-% WC aufweist.

5. Giesswerkzeug nach einem der vorliegenden Ansprüche, **dadurch gekennzeichnet, dass** bei der Herstellung der Verschleissschutzschicht der verwendete Schweisszusatzwerkstoff als Pulver vorliegt, das Wolfram-Schmelzcarbid auf Basis von Eisen und/oder Nickel und/oder Cobalt enthält.

6. Giesswerkzeug nach einem der vorhergehenden Ansprüche, **dadurch gekennzeichnet, dass** die Verschleissschutzschicht des Giesswerkzeugs durch Nachbearbeitung des Schweissauftrages mittels Erodieren hergestellt ist.

7. Giesswerkzeug nach einem der vorhergehenden Ansprüchen, **dadurch gekennzeichnet, dass** der Werkzeugstahl des Grundmaterials ein Warmarbeitsstahl ist, insbesondere 1.2343 oder 1.2344.

8. Giesswerkzeug nach einem der Ansprüche 1 bis 6, **dadurch gekennzeichnet, dass** als Grundmaterial ein günstiges Basismaterial mit geringerem Verschleisswiderstand und/oder geringerer Warmfestigkeit verwendet wird, vorzugsweise normaler Stahl.

9. Giesswerkzeug nach einem der vorhergehenden Ansprüche, **dadurch gekennzeichnet, dass** die Schichtstärke der Verschleissschutzschicht über die beschichtete Oberfläche des Giesswerkzeuges variiert, wobei insbesondere wenigstens ein während des Giessprozesses hochbelastete Oberflächenbereich des Giesswerkzeugs eine höhere Schichtstärke als ein weniger belasteter Oberflächenbereich aufweist.

10. Giesswerkzeug nach einem der vorhergehenden Ansprüche, **dadurch gekennzeichnet, dass** der Wolframcarbid-Anteil der Verschleissschutzschicht über die beschichtete Oberfläche des Giesswerkzeuges variiert, wobei insbesondere wenigstens ein während des Giessprozesses hochbelasteter Oberflächenbereich des Giesswerkzeugs einen höheren Wolframcarbid-Anteil in der dort aufgetragenen Verschleissschutzschicht aufweist als die aufgetragene Verschleissschutzschicht in einem weniger belasteten Oberflächenbereich des Giesswerkzeuges.

11. Verfahren zur Herstellung eines Giesswerkzeuges für den Metalldruck- oder Metallschwerkraftguss, insbesondere Aluminiumdruck- oder Aluminiumschwerkraftguss, wobei das Giesswerkzeug vorzugsweise gemäß einem der Ansprüche 1 bis 10 ausgeführt ist, mit den Verfahrensschritten:
a. Bereitstellen eines die Giessform bildenden Grundmaterials bestehend aus Stahl, insbesondere Werkzeugstahl,
b. Auftragen einer mit Wolfram versetzten Verschleissschutzschicht zumindest auf Teilbereichen der Oberfläche des Grundmaterials, wobei die Verschleissschutzschicht durch Aufschweissen eines Wolframcarbid-haltigen Schweisszusatzwerkstoffes auf die Oberfläche des Grundmaterials hergestellt wird, wobei der verwendete Schweisszusatzwerkstoff Wolfram-Schmelzcarbid umfasst, das aus einem eutektischen Gemenge aus WC und W₂C besteht.

12. Verfahren nach Anspruch 11, **dadurch gekennzeichnet, dass** das Aufschweissen des Wolframcarbid-haltigen Schweisszusatzwerkstoffes per Laserauftragsschweissen, auch als Laser Metal Deposition LMD, oder per Laser Metal Fusion, LMF, erfolgt.

13. Verwendung eines Giesswerkzeuges nach einem der vorstehenden Ansprüche 1 bis 10 und/oder hergestellt nach dem Verfahren gemäß Anspruch 11 für den Aluminiumdruckguss bzw. den Aluminiumschwerkraftguss.

## Claims

1. Casting tool for metal die casting or metal gravity die casting, in particular aluminium die casting or aluminium gravity die casting, comprising a base material forming the casting mould consisting of steel, in particular tool steel,
wherein a wear protection layer mixed with tungsten is applied to at least partial areas of the surface of the base material, **characterised in that** the wear protection layer is produced by welding a welding filler material containing tungsten carbide onto the surface of the carrier material, wherein the filler metal used comprises tungsten fused carbide consisting of a eutectic mixture of WC and W₂C.

2. Casting tool according to claim 1, **characterised in that** the applied wear protection layer has a tungsten/tungsten carbide volume fraction of about 30-40% volume fraction, preferably 32%-38% volume fraction, ideally about 36% volume fraction.

3. Casting tool according to claim 2, **characterised in that** the remaining volume fraction of the wear protection layer that does not contain tungsten/tungsten carbide has an average hardness of 650-750 HV 0.03, preferably around 720 HV 0.03.

4. Casting tool according to any one of the preceding claims, **characterised in that** the tungsten fused carbide has phase proportions of 73-80% by weight W₂C and 20-27% by weight WC.

5. Casting tool according to any one of the preceding claims, **characterised in that** in the production of the wear protection layer, the welding filler material used is in the form of a powder containing tungsten fused carbide based on iron and/or nickel and/or cobalt.

6. Casting tool according to any one of the preceding claims, **characterised in that** the wear protection layer of the casting tool is produced by reworking the weld deposit by means of erosion.

7. Casting tool according to any one of the preceding claims, **characterised in that** the tool steel of the base material is a hot work tool steel, in particular 1.2343 or 1.2344.

8. Casting tool according to any one of claims 1 to 6, **characterised in that** a low-cost base material with lower wear resistance and/or lower heat resistance is used as the base material, preferably normal steel.

9. Casting tool according to any one of the preceding claims, **characterised in that** the thickness of the wear protection layer varies over the coated surface of the casting tool, wherein, in particular, at least one surface area of the casting tool that is subjected to high stress during the casting process has a higher layer thickness than a surface area that is subjected to less stress.

10. Casting tool according to any one of the preceding claims, **characterised in that** the tungsten carbide content of the wear protection layer varies over the coated surface of the casting tool, wherein, in particular, at least one surface area of the casting tool that is subjected to higher stress during the casting process has a higher tungsten carbide content in the wear protection layer applied there than the wear protection layer applied in a less stressed surface area of the casting mould.

11. Method for producing a casting tool for metal die casting or metal gravity die casting, in particular aluminium die casting or aluminium gravity die casting, wherein the casting tool is preferably designed according to any one of claims 1 to 10, having the method steps:
a. providing a base material forming the casting mould, consisting of steel, in particular tool steel,
b. applying a wear protection layer mixed with tungsten to at least partial areas of the surface of the base material, wherein the wear protection layer is produced by welding a welding filler material containing tungsten carbide onto the surface of the carrier material, wherein the filler metal used comprises tungsten fused carbide consisting of a eutectic mixture of WC and W₂C.

12. Method according to claim 11, **characterised in that** the tungsten carbide-containing welding filler material is welded on using laser deposition welding, also known as laser metal deposition (LMD), or laser metal fusion (LMF).

13. Use of a casting tool according to any one of the preceding claims 1 to 10 and/or produced according to the method according to claim 11 for aluminium die casting or aluminium gravity die casting.

## Revendications

1. Outil de coulée pour la coulée sous pression de métaux ou la coulée par gravité de métaux, notamment la coulée sous pression d'aluminium ou la coulée par gravité d'aluminium, comprenant un matériau de base formant le moule de coulée, constitué d'acier, notamment d'acier à outils,
une couche de protection contre l'usure mélangée à du tungstène étant appliquée au moins sur des zones partielles de la surface du matériau de base, **caractérisé en ce que** la couche de protection contre l'usure est fabriquée par soudage d'un matériau d'apport de soudage contenant du carbure de tungstène sur la surface du matériau de support, le matériau d'apport de soudage utilisé comprenant du carbure de tungstène fondu, qui est constitué d'un mélange eutectique de WC et de W₂C.

2. Outil de coulée selon la revendication 1, **caractérisé en ce que** la couche de protection contre l'usure appliquée présente une fraction volumique de tungstène/carbure de tungstène d'environ 30 à 40 % de fraction volumique, de préférence de 32 à 38 % de fraction volumique, idéalement d'environ 36 % de fraction volumique.

3. Outil de coulée selon la revendication 2, **caractérisé en ce que** la fraction volumique restante de la couche de protection contre l'usure qui ne contient pas de tungstène/carbure de tungstène présente un degré de dureté moyen de 650 à 750 HV 0,03, de préférence d'environ 720 HV 0,03.

4. Outil de coulée selon l'une quelconque des revendications précédentes, **caractérisé en ce que** le carbure de tungstène fondu présente des proportions de phase de 73 à 80 % en poids de W₂C et de 20 à 27 % en poids de WC.

5. Outil de coulée selon l'une quelconque des revendications présentes, **caractérisé en ce que**, lors de la fabrication de la couche de protection contre l'usure, le matériau d'apport de soudage utilisé se présente sous forme de poudre qui contient du carbure de tungstène fondu à base de fer et/ou de nickel et/ou de cobalt.

6. Outil de coulée selon l'une quelconque des revendications précédentes, **caractérisé en ce que** la couche de protection contre l'usure de l'outil de coulée est fabriquée par rectification de l'application de soudage par érosion.

7. Outil de coulée selon l'une quelconque des revendications précédentes, **caractérisé en ce que** l'acier à outils du matériau de base est un acier pour travail à chaud, notamment 1.2343 ou 1.2344.

8. Outil de coulée selon l'une quelconque des revendications 1 à 6, **caractérisé en ce qu'**un matériau de base avantageux ayant une résistance à l'usure plus faible et/ou une résistance à la chaleur plus faible est utilisé en tant que matériau de base, de préférence un acier normal.

9. Outil de coulée selon l'une quelconque des revendications précédentes, **caractérisé en ce que** l'épaisseur de couche de la couche de protection contre l'usure varie sur la surface revêtue de l'outil de coulée, notamment au moins une zone de surface de l'outil de coulée fortement sollicitée pendant le processus de coulée présente une épaisseur de couche plus élevée qu'une zone de surface moins sollicitée.

10. Outil de coulée selon l'une quelconque des revendications précédentes, **caractérisé en ce que** la proportion de carbure de tungstène de la couche de protection contre l'usure varie sur la surface revêtue de l'outil de coulée, au moins une zone de surface de l'outil de coulée fortement sollicitée pendant le processus de coulée présentant notamment une proportion de carbure de tungstène plus élevée dans la couche de protection contre l'usure qui y est appliquée que la couche de protection contre l'usure appliquée dans une zone de surface moins sollicitée de l'outil de coulée.

11. Procédé de fabrication d'un outil de coulée pour la coulée sous pression de métaux ou la coulée par gravité de métaux, notamment la coulée sous pression d'aluminium ou la coulée par gravité d'aluminium, l'outil de coulée étant de préférence réalisé selon l'une quelconque des revendications 1 à 10, avec les étapes de procédé suivantes :
a. la fourniture d'un matériau de base formant le moule de coulée, constitué d'acier, notamment d'acier à outils,
b. l'application d'une couche de protection contre l'usure mélangée à du tungstène, au moins sur des zones partielles de la surface du matériau de base, la couche de protection contre l'usure étant fabriquée par soudage d'un matériau d'apport de soudage contenant du carbure de tungstène sur la surface du matériau de base, le matériau d'apport de soudage utilisé comprenant du carbure de tungstène fondu, qui est constitué d'un mélange eutectique de WC et de W₂C.

12. Procédé selon la revendication 11, **caractérisé en ce que** le soudage du métal d'apport de soudage contenant du carbure de tungstène est effectué par soudage par dépôt laser, également appelé Laser Metal Deposition, LMD, ou par Laser Metal Fusion, LMF.

13. Utilisation d'un outil de coulée selon l'une quelconque des revendications 1 à 10 précédentes et/ou fabriqué par le procédé selon la revendication 11 pour la coulée sous pression d'aluminium ou la coulée par gravité d'aluminium.
